# EUROPÄISCHE PATENTANMELDUNG

(11) **EP 1 720 135 A1**
(43) Veröffentlichungstag der Anmeldung: **08.11.2006**
(21) Anmeldenummer: 05405340.0
(22) Anmeldetag: 06.05.2005
(51) Int. Cl.: G07D 7/16

(54) **Einrichtung zum Feststellen von Dicken und Dickenvariationen**

(71) Anmelder: BEB Industrie-Elektronik AG, 3414 Oberburg (CH)
(72) Erfinder: Schletti, Reto, 3122 Kehrsatz (CH); Mannhart, Jevgenij, 6330 Cham (CH)
(74) Vertreter: Frei Patent Attorneys

(57) **Zusammenfassung**

Die erfindungsgemässe Einrichtung zeichnet sich im wesentlichen dadurch aus, dass die Auslenkung eines Führungselements (2) relativ zu einem anderen Führungselement (1), welche durch die Anwesenheit eines flachen Gegenstandes (3) oder einer Variation seiner Dicke hervorgerufen wird, über ein elektrisch leitfähiges, aber nicht ferromagnetisches Material durch mindestens eine flache Luftspule (6) erfasst wird, die ein vom elektrisch leitfähigen Material beeinflussbares magnetisches Wechselfeld erzeugt. Das Wechselfeld bewirkt im elektrisch leitfähigen (also meist metallischen), nicht ferromagnetischen, Material Wirbelströme. Diese beeinflussen ihrerseits das Wechselfeld. Wenn die Flachspule/n bspw. Teil (je) eines LC-Schwingkreises ist/sind, werden Resonanzfrequenz und Dämpfung dieses Schwingkreises beeinflusst; bei konstanter Anregungsfrequenz ändert sich die Schwingungsamplitude.

## Beschreibung

Die Erfindung betrifft das Gebiet der Verarbeitung wertpapierähnlicher flacher Gegenstände, beispielsweise Banknoten, Schecks, Aktien, Papieren mit Sicherheitsaufdruck, Urkunden, Eintrittskarten oder Fahrkarten, Gutscheinen, aber auch von Kredit- oder Bankomatkarten und/oder von Identifikations- oder Zugangskarten. Sie betrifft insbesondere eine Einrichtung zum Messen einer Dicke oder zum Feststellen einer Dickenvariation eines flachen Gegenstandes und eine Vorrichtung, die mit einer solchen Einrichtung versehen ist. In Vorrichtungen zum Verarbeiten von Banknoten und Schecks dienen solche Einrichtungen oft als Tape-Sensoren, also als Einrichtungen zum Feststellen, ob eine Banknote/ein Scheck mit einem Klebstreifen versehen wurde und daher bspw. nicht mehr in Umlauf gebracht werden soll. Eine weitere mögliche Verwendung ist das Erkennen von Mehrfacheinzügen.

Mit "Verarbeitung" sind jegliche Verfahren gemeint, denen wertpapierähnliche Gegenstände unterworfen werden können, also beispielsweise Lesen, Erkennen, Kontrollieren, Verifizieren, Prüfen, Zählen, (Aus-)sortieren, Transportieren und/oder Stapeln, etc.

Eine Einrichtung zum Feststellen einer durch einen Klebstreifen verursachten Dickenvariation muss einerseits aufgrund der geringen Dicke von typischen erhältlichen Klebstreifen relativ hochauflösend Dickenvariationen feststellen, andererseits ist auch eine laterale Auflösung wünschenswert, um eine von einem Klebstreifen verursachte Dickenvariation beispielsweise vom Fall von mehreren gleichzeitig eingezogenen Banknoten zu unterscheiden.

Es ist bekannt, wertpapierähnliche Gegenstände zwischen Walzen zu transportieren, von denen die eine relativ zur ändern bewegbar ist und die durch Federn gegeneinander gedrückt werden. Dabei ist die Auslenkung der Walzen relativ zueinander ein Mass für die Dicke des dazwischen transportierten Gegenstandes.

Aufgabe der Erfindung ist es, eine Einrichtung zum Feststellen von Dicken und Dickenvariationen von flachen Gegenständen zu schaffen, welche eine genügend grosse Empfindlichkeit auch für durch Klebstreifen verursachte Dickenvariationen aufweist. Die Einrichtung soll vom Prinzip her einfach und in der Herstellung möglichst kostengünstig sein. Zudem soll sie vorzugsweise das Feststellen von Variationen der Dicke eines flachen Gegenstandes mindestens teilweise mit einer lateralen Auflösung auf einer gesamten Breite des Gegenstandes ermöglichen.

Die Aufgabe wird gelöst durch eine Einrichtung, wie sie in den Patentansprüchen definiert ist. Ebenfalls Gegenstand der Erfindung ist eine Vorrichtung, die mit einem als solche Einrichtung ausgebildeten Tape-oder Mehrfacheinzugssensor versehen ist.

Die erfindungsgemässe Einrichtung zeichnet sich im wesentlichen dadurch aus, dass die Auslenkung eines Führungselements relativ zu einem anderen Führungselement, welche durch die Anwesenheit eines flachen Gegenstandes oder einer Variation seiner Dicke hervorgerufen wird, über ein elektrisch leitfähiges, aber nicht ferromagnetisches Material durch mindestens eine flache Luftspule erfasst wird, die ein vom elektrisch leitfähigen Material beeinflussbares magnetisches Wechselfeld erzeugt. Das Wechselfeld bewirkt im elektrisch leitfähigen (also meist metallischen), nicht ferromagnetischen, Material Wirbelströme. Diese beeinflussen ihrerseits das Wechselfeld. Wenn die Flachspule/n bspw. Teil (je) eines LC-Schwingkreises ist/sind, werden Resonanzfrequenz und Dämpfung dieses Schwingkreises beeinflusst; bei konstanter Anregungsfrequenz ändert sich die Schwingungsamplitude.

Die Einrichtung kann so ausgebildet sein, dass eine Auslenkung der Führungselemente gegeneinander eine Verschiebung des elektrisch leitfähigen Materials entlang einer durch die Flachspule definierten Ebene bewirkt. Dann ändert sich durch die Auslenkung beispielsweise die Abdeckung der Flachspule durch das leitfähige Material. Geometrie und Anordnung der Spule und des elektrisch leitfähigen Materials sind beispielsweise derart, dass die Abdeckung einer Spule sich um so mehr vergrössert, je weiter ein Führungselement ausgelenkt wird. Als Alternative oder zusätzlich kann auch eine Bewegung des leitfähigen Materials entlang einer Richtung senkrecht zu der Ebene der Flachspule bewirkt werden. Die Dämpfungseigenschaften des LC-Schwingkreises hängen sehr empfindlich vom Abstand von elektrisch leitfähigem Material zur Luftspule ab.

Ein elektrisch leitfähiges Element (welches das erwähnte elektrisch leitfähige Material aufweist) kann durch die Auslenkung eines Führungselements, zum Beispiel über ein entsprechend gestaltetes Übertragungsmittel, das als Hebel wirken kann, derart relativ zur Flachspule bewegt werden, dass sich
(a) der Abstand,
(b) die Abdeckung, oder
(c) der Abstand und die Abdeckung der Spule
ändert.

In letzerem Fall sind Spule und leitfähiges Element dabei bevorzugt so angeordnet, dass eine erhöhte Abdeckung einer Spule mit einer Abstandsverkleinerung einhergeht.

Ein als Hebel wirkendes Übertragungsmittel kann auch so ausgebildet und angeordnet sein, dass eine Auslenkung des Führungselements vervielfacht wird, was die Messempfindlichkeit erhöht.

Der Abstand zwischen metallischer Komponente und Flachspule ist so, dass eine genügend grosse Empfindlichkeit des Wechselfeldes vorhanden ist. Er beträgt beispielsweise nicht mehr als 7 mm, vorzugsweise nicht mehr als 5 mm, besonders bevorzugt höchstens 3 mm.

Eine Flachspule kann einfach durch Leiterbahnen einer gedruckten Schaltung (einer Leiterplatte) ausgebildet sein, was sehr kostengünstig ist. Die Anregungs- und Auswertungselektronik für die Flachspule kann auf derselben Leiterplatte vorhanden sein, was auch fertigungstechnisch sehr vorteilhaft ist. Das Zur-Verfügungstellen eines elektrisch leitfähigen, insbesondere metallischen, Materials in oder am Führungselement oder - oft praktischer - an einem mit dem Führungselement verbundenen Übertragungsmittel, ist sehr einfach zu bewerkstelligen. Beispielsweise kann das Führungselement oder Übetragungsmittel als Ganzes metallisch sein, es kann ein Metallelement (bspw. als Metallplättchen) am Übertragungsmittel befestigt sein, oder dieses kann in einem peripheren (Rand)bereich einen Abschnitt von elektrisch leitfähigem Material aufweisen; das Material kann bspw. irgendwie befestigt oder auch aufgedampft etc. sein.

In einer bevorzugten Ausführungsform sind mehrere nebeneinander angeordnete Paare von Führungselementen und zugeordnete Luftspulen in einer Reihe angeordnet, so dass Dickenvariationen auf einer gesamten Breite eines flachen Gegenstandes mit einer lateralen Auflösung bestimmt werden können. Die Reihe verläuft bevorzugt quer zur Förderrichtung der flachen Gegenstände.

Um ein Ansteuern und Auswerten mehrerer Luftspulen und damit auch den Aufbau der Einrichtung mit mehreren Spulen möglichst einfach und günstig gestalten zu können, wird bevorzugt nur ein einziger Detektor, unter Umständen ein Synchrondetektor verwendet. Die Signale der Luftspulen werden dazu über eine Multiplexeinheit geführt.

In einer Ausführungsform der Einrichtung sind (ggf. pro Führungselementepaar) einem Element mit dem elektrisch leitfähigen Material mindestens zwei Flachspulen zugeordnet. Diese zwei Flachspulen liegen nebeneinander und haben eine qualitativ gegenläufige Abhängigkeit ihrer Breite (also der lateralen Ausdehnung) von der Position entlang der Bewegungsrichtung des leitfähigen Materials. Ein Differenzsignal der beiden Flachspulen wird zur Messung verwendet. Es können beispielsweise zwei nebeneinander angeordnete Dreieckspulen vorhanden sein, die gleich gross sind und sich zu einem Rechteck ergänzen.

Eine einzelne Flachspule kann auch aus mehreren Teilspulen bestehen, die nicht in derselben Ebene angeordnet, sondern bspw. auf der Vor- und Rückseite einer Leiterplatte ausgebildet sind.

Es hat sich bewährt, eine Flachspule so zu verschalten, dass die Flachspule und ein kapazitives Element, sowie eventuell weitere Elemente zusammen einen LC-Schwingkreis bilden. Vorzugsweise wird der Schwingkreis nicht in Resonanz angeregt, sondern an einer Flanke, beispielsweise der niederfrequenten Flanke, zum Beispiel bei einer Frequenz von höchstens 98% oder höchstens 95% der Resonanzfrequenz. Die ideale Anregungsfrequenz ist abhängig von der Güte Q.

Gemäss einer bevorzugten Ausführungsform wird die Anregungsfrequenz der Flachspule so hoch sein, dass das Produkt der Frequenz und der Spuleninduktivität viel grösser ist als der ohmsche Widerstand, (dass also der Imaginärteil der komplexen Impedanz der Spule viel grösser ist als der Realteil, beispielsweise mindestens 100 mal grösser). Im Gegensatz zum ohmschen Widerstand ist nämlich die Induktivität nur von der Geometrie abhängig und daher temperaturunabhängig. Damit ist auch die ganze Messmethode temperaturunabhängig. Wenn zusätzlich noch frequenzselektiv gemessen wird, erreicht man eine weitgehende Unabhängigkeit von jeglichen äusseren Einflüssen. Gemäss einer besonders bevorzugten Ausführungsform beträgt die Anregungsfrequenz zwischen 1 MHz und 10 MHz.

Im Folgenden werden Ausführungsbeispiele der Erfindung anhand von schematischen Figuren genauer beschrieben. Es zeigen:
- Figur 1 eine Seitenansicht der erfindungsgemässen Einrichtung,
- Figur 2 ein vereinfachtes Schaltschema für eine Flachspule,
- Figur 3 eine schematisch dargestellte Resonanzkurve des LC-Schwingkreises,
- Figur 4 ein ebenfalls stark vereinfachtes Schaltschema mit Verwendung eines Synchron-Detektors,
- Figur 5 ein Schaltschema zum Betreiben der Einrichtung in einem Multiplexverfahren,
- Figur 6 das Funktionsprinzip einer Anordnung mit einer einzigen Flachspule pro Führungselementepaar,
- Figur 7 das Funktionsprinzip einer Anordnung mit zwei Dreieckspulen,
- Figur 8 eine weitere Ausführungsform der Erfindung, und
- Figur 9 noch eine Ausführungsform der Erfindung.

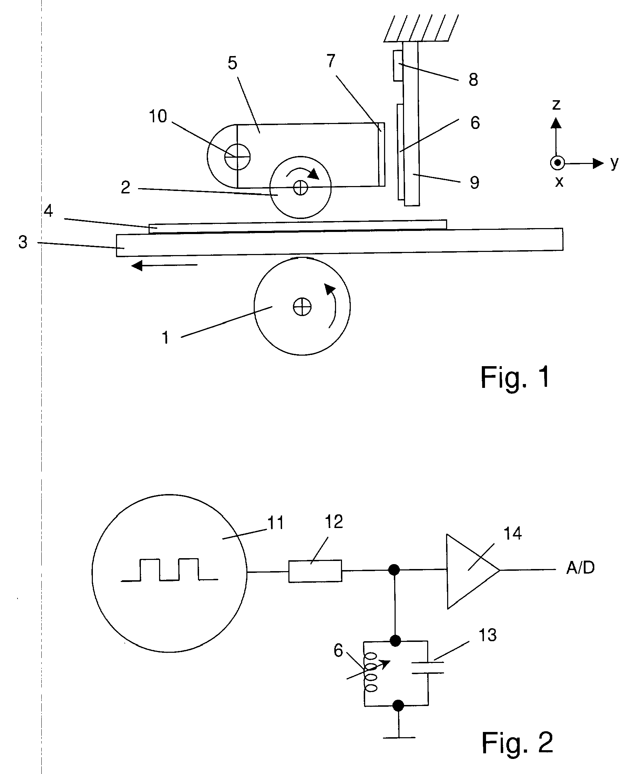

In der in **Figur 1** gezeigten Einrichtung wird zwischen zwei Führungselementen 1, 2 welche als Transportwalzen vorliegen, ein flacher Gegenstand 3, z. B. eine Banknote, transportiert. Eines der Führungselemente 2 ist derart bewegbar angeordnet, dass es relativ zum anderen Führungselement, hier in z-Richtung, ausgelenkt wird, sobald sich der flache Gegenstand 3 in y-Richtung zwischen die Führungselemente schiebt. Das zweite Führungselement 2 wird weiter ausgelenkt, wenn sich die Dicke der Banknote ändert. Eine solche Dickenvariation kann, wie in Figur 1 gezeigt, durch ein auf der Banknote angebrachtes Stück Klebstreifen 4 verursacht werden. Die Auslenkungen des Führungselements 2 werden über ein mit dem Führungselement 2 gekoppelten, gleichzeitig als Halterung der Transportwalze dienendes Übertragungsmittel 5 in eine Bewegung relativ zu einer Oberfläche einer Leiterplatte 9 und damit relativ zu einer auf der Leiterplattenoberfläche durch Leiterbahnen gebildete Flachspule 6 übertragen. Dies geschieht, indem die Halterung eine leichte Schwenkbewegung um einen, einen Fixpunkt definierenden, Drehzapfen 10 ausführt. Das Übertragungsmittel 5 weist ein elektrisch leitfähiges Element 7, z. B. ein am Übertragungsmittel angebrachtes Metallplättchen, auf, welches der Flachspule 6 gegenüberliegend angeordnet ist. Das elektrisch leitfähige Element muss nicht als separates Bauteil vorhanden sein, ebensogut kann das Übertragungsmittel als Ganzes oder abschnittweise metallisch sein.

Die Flachspule 6 ist frei von einem ferromagnetischen Kern und wirkt daher als Luftspule.

Sichtbar in der Figur ist ein einziges Paar von Führungselementen, also Transportwalzen, und eine einzige Flachspule. Bevorzugt werden hingegen mehrere in x-Richtung nebeineinander (also in der Figur hintereinander) liegende Führungselementepaare vorhanden sein. Dies ermöglicht eine gewisse - entsprechend des Abstandes zweier Walzenpaare - laterale Auflösung, also eine Auflösung in x-Richtung. Eine solche kann von Bedeutung sein, bspw. um eine Banknote mit einem entlang der y-Richtung auf der ganzen Länge vorhandenen Klebeband von zwei aufeinander liegenden Banknoten zu unterscheiden. Eine Auflösung in der anderen Richtung (y) wird erwirkt, indem während des Transports des Gegenstandes zwischen den Transportwalzen zeitaufgelöst gemessen wird.

Durch eine Bewegung des Übertragungsmittels 5 wird das elektrisch leitfähige Element 7 in der gezeichneten Ausführungsform im wesentlichen parallel zur Flachspule bewegt. Die Flachspule ist so angeordnet, dass sich deren Abdeckung - diejenige Teilfläche der Flachspulen-Fläche, welcher die metallische Komponente gegenüberliegt - durch das Element durch eine solche Bewegung ändert.

Im Betriebszustand wird die bzw. jede Flachspule mit einer Wechselspannung (Frequenz: zwischen 1 MHz und 10 MHz) zum Aussenden eines magnetischen Wechselfeldes angeregt. Da die elektrisch leitfähige Komponente 7 im Einflussbereich des Wechselfeldes ist, werden in diesem Wirbelströme angeregt, welche ihrerseits das Wechselfeld und damit auch die Impedanz der Flachspule 6 beeinflussen. Der Einfluss ist um so grösser, je kleiner der Abstand Flachspule-Komponente ist, und je grösser die Abdeckung ist, d.h. diejenige Teilfläche der Flachspulen-Fläche, welche der Komponente gegenüberliegt.

Das Funktionsprinzip der Flachspule im Zusammenspiel mit der leitfähigen Komponente entspricht demjenigen eines Transformators, wobei die Flachspule der Primärwicklung entspricht, und die Wirbelströme in der Komponente die Wirkung der Sekundärwicklung haben.

Die Flachspule kann spiralartig ausgebildet oder aus konzentrischen Elementen aufgebaut sein, wobei bei konzentrischen Elementen die Stromversorgung via Durchführungen vom Leiterplatteninnern oder von der Rückseite her erfolgt. Ebenfalls auf der Leiterplatte befindet sich eine nur schematisch gezeichnete Versorgungs- und Auswerteelektronik 8. Der Abstand zwischen der Oberfläche der elektrisch leitfähigen Komponente 7 und der Leiterplatte 9 beträgt bspw. maximal 7 mm, bevorzugt weniger als 5 mm, oft weniger als 3 mm und im Optimalfall im Maximum ca. 2 mm.

Das metallische Element hat vorzugsweise eine grosse elektrische Leitfähigkeit. Es besteht bspw. im Wesentlichen aus Aluminium. Das elektrisch leitfähige Material ist nicht ferromagnetisch, sondern paramagnetisch oder diamagnetisch um Hystereseeffekte weitgehend zu vermeiden.

In **Figur 2** ist sehr schematisch dargestellt, wie eine Flachspule 6 in die elektronische Schaltung eingebunden ist. Ein Wechselspannungs-Generator 11 - im gezeichneten Beispiel erzeugt er ein Rechteck-Signal - regt über einen Widerstand 12 einen die Flachspule 6 und mindestens ein kapazitives Element 13 aufweisenden LC-Schwingkreis an. Das von einem integrierenden Verstärker 14 abgegriffene Antwort-Signal ist proportional zur Amplitude der Schwingung, welche ihrerseits abhängig ist von der Impedanz der Flachspule 6. Im Falle von digitaler Signalverarbeitung folgt wie in den folgenden Ausführungsformen auch auf den Verstärker 14 ein Analog-Digital-Wandler A/D.

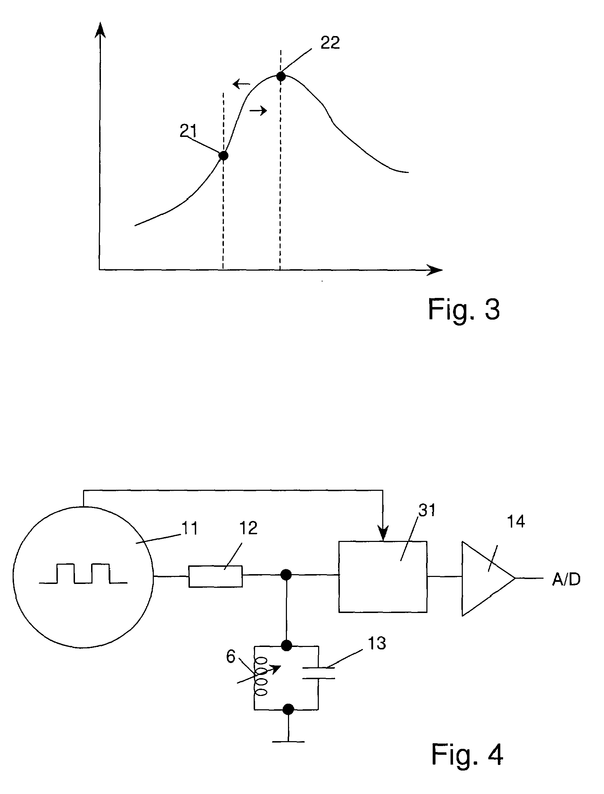

Vorzugsweise wird, wie in **Figur 3** anhand eines Signals einer einzelnen Flachspule dargestellt, der Schwingkreis nicht wie bei Distanzmessgeräten üblich in Resonanz betrieben, sondern in der bspw. niederfrequenten Flanke. In Fig. 3 sind ein bevorzugter Arbeitspunkt 21 und der Resonanzpunkt 22 hervorgehoben. Die Abhängigkeit der Amplitude A von einer Verschiebung der Resonanzkurve, ausgelöst durch eine Impedanzänderung, ist im Arbeitspunkt 21 deutlich prägnanter als am Resonanzpunkt 22. In der Figur ist der Arbeitspunkt an einer besonders steilen Stelle der Flanke in der Nähe des Resonanzpunktes 22 gezeichnet, aber im Prinzip kann der Arbeitspunkt irgendwo auf der Flanke liegen.

Die Messempfindlichkeit der Anordnung und die Unempfindlichkeit gegenüber störenden Einflüssen kann erhöht werden, wenn die Signalauswertung frequenzselektiv erfolgt. In **Figur 4** ist schematisch ein Synchrondetektor 31 dargestellt, als dessen Steuersignal das Anregungssignal verwendet wird. Die Funktionsweise von Synchrondetektoren ist an sich bekannt und soll nicht weiter erläutert werden.

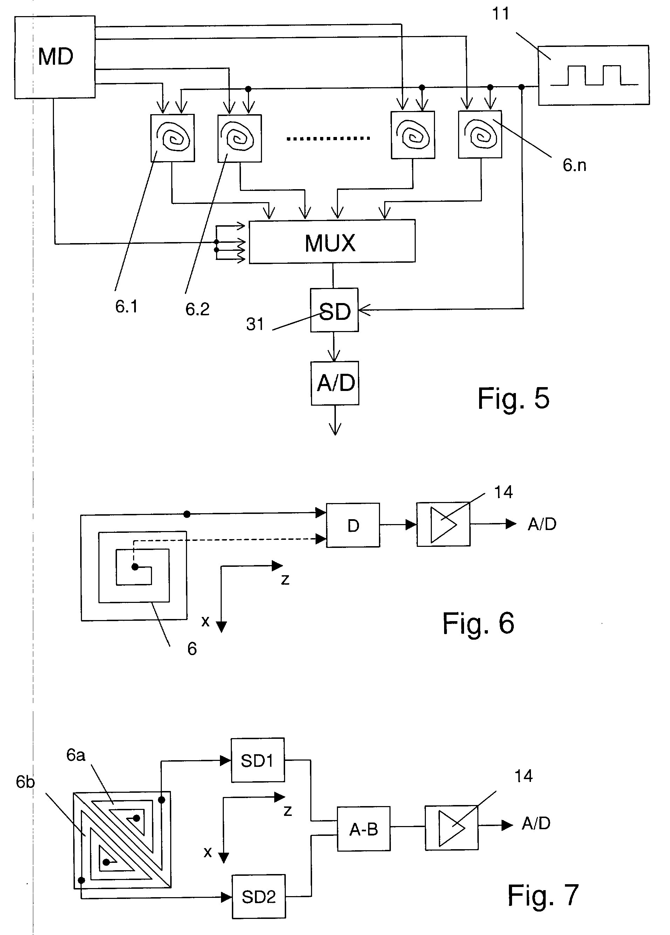

In **Figur 5** ist ein schematisches Schaltungsschema für mehrere voneinander unabhängige, nebeneinander angeordnete Flachspulen 6.1....6.n gezeigt. Die Spulen werden über den Wechselspannungsgenerator 11 angeregt. Die Antwort-Signale der Spulen gelangen in eine Multiplexeinheit MUX und von dort in einen Synchrondetektor 31. Anschliessend werden die analogen Signale zur weiteren Verwendung in einem Analog-Digitalwandler A/D in digitale Signale umgewandelt. Es ist auch möglich die Multiplexeinheit wegzulassen, dann wird pro Spule ein Detektor benötigt.

Die Multiplexeinheit funktioniert als Zeitmultiplexer, wobei alle Flachspulen gleichzeitig angeregt werden und ungefähr die gleiche Resonanzfrequenz haben. Die Multiplex-Frequenz fₘ wird so gewählt, dass sie viel kleiner ist als die Anregungsfrequenz selbst, dass aber die Periode 1/fₘ deutlich kleiner ist als die Durchlaufzeit eines wertpapierähnlichen Gegenstandes zwischen den Führungselementen. Typischerweise liegt fₘ zwischen 1 kHz und 100 kHz. Die Multiplexeinheit MUX wird über eine Steuerungseinheit MD angesteuert. Falls nötig kann man auch die Spulen mit Zeitmultiplexing aktivieren, was in der Figur durch die Pfeile von der Steuerungseinheit zu den Spulen angedeutet wird. Dies ist bspw. dann vorteilhaft, wenn sich die Spulen bei gleichzeitigem Betrieb gegenseitig stören würden.

Alternativ ist auch ein Betrieb mit nur einem Synchrondetektor ohne Zeitmultiplexer denkbar, wenn die einzelnen Spulen eine relativ scharfe Resonanzkurve haben. Dann wird die Anregungsfrequenz des Wechselspannungsgenerators periodisch geändert und in jeder Periode jede der Spulen 6.1...6.n angeregt. Die Frequenz f_{mod} dieser Anregungsfrequenzmodulation wird ebenfalls so gewählt, dass sie viel kleiner ist als die Anregungsfrequenz selbst, dass aber die Periode 1/f_{mod} deutlich kleiner ist als die Durchlaufzeit eines wertpapierähnlichen Gegenstandes zwischen den Führungselementen. Typischerweise liegt f_{mod} zwischen 1 kHz und 100 kHz.

Die Multiplex-Anordnung gemäss Figur 5 ist auch ohne Synchrondetektor denkbar.

**Figur 6** zeigt noch eine mögliche Ausgestaltung der Flachspule 6, welche hier eine rechteckige Form hat und spiralartig verläuft. Im Unterschied zu den vorstehend beschriebenen Ausführungsformen ist gemäss dem Schema von Figur 6 ein nicht notwendigerweise frequenzselektiver Amplitudendetektor D vorgesehen, auf welchen ein Verstärker und ein Analog-Digital-Wandler folgt.

In **Figur 7** ist eine Version realisiert, in welcher anstelle einer einzelnen Flachspule zwei Flachspulen vorhanden sind, welche in einer Flachspulenanordnung mit gegenläufiger Abhängigkeit der Breite (der Ausdehnung in x-Richtung) von der Auslenkungsrichtung des elektrisch leitfähigen Elementes vorliegen. In Figur 7 sieht man zwei gleich grosse, zusammen ein Viereck bildende Dreieck-Flachspulen 6a, 6b, die in die elektronische Schaltung eingebunden sind. Von den Signalen SD1, SD2 der beiden LC-Schwingkreise mit Spulen 6a, 6b wird ein Differenzsignal A-B gebildet. In der Figur ist ein Verstärker 14 nach der Differenzbildung gezeichnet; oft wird aber alternativ dazu oder ergänzend zur Verstärkung des Differenzsignals eine Signalverstärkung der Signale SD1, SD2 schon vor der Differenzbildung stattfinden. Auch die A/D-Wandlung kann vor der Differenzbildung stattfinden, wobei dann zwei A/D Wandler benötigt werden.

Durch die Differenzbildung erhöht sich die Sensitivität der Anordnung bei sich ändernder Abdeckung. In einer Ausführungsform mit mehreren nebeneinander angeordneten Führungselementepaaren ist bspw. pro Führungselementepaar ein Flachspulenpaar vorhanden.

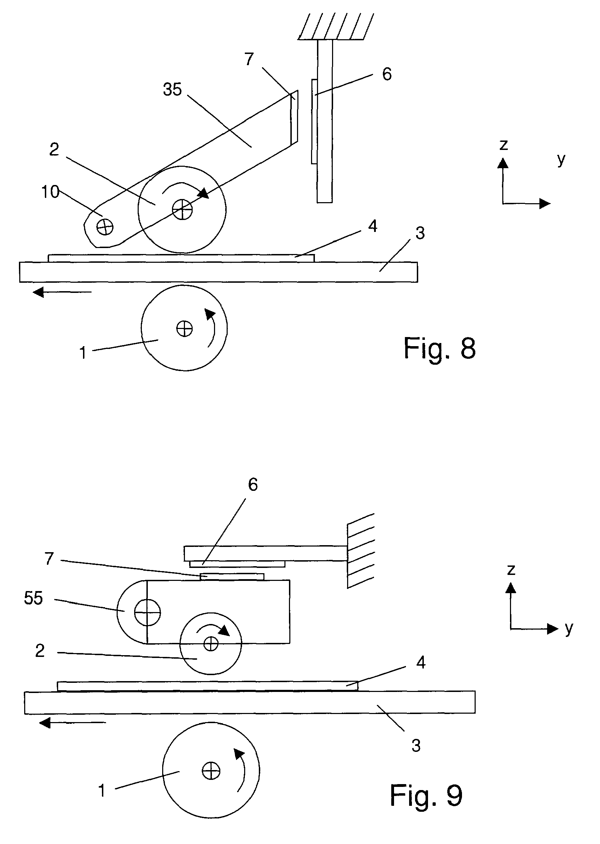

Ergänzend oder alternativ zur Anordnung gemäss Figur 1, in welcher durch eine Auslenkung des Übertragungsmittels 5 die von der metallischen Komponente abgedeckte Teilfläche der Fläche der Flachspule ändert, sind weitere Anordnungen denkbar, die anhand der **Figuren 8 und 9** kurz erläutert werden.

**Figur 8** zeigt eine Ausführungsform der Erfindung, in der ein entlang einer Achse länglich gestaltetes Übertragungsmittel 35 derart mit dem einen Führungselement 2 verbunden ist, dass eine Auslenkung dieses Führungselements 2 hebelartig verstärkt wird. Das Übertragungsmittel 35 ist dabei um eine Drehachse an seinem der metallischen Komponente gegenüberliegenden Ende drehbar. Das Führungselement 2 ist in Bezug auf die Längsausdehnung des Übertragungsmittels 35 möglichst nahe an der Drehachse des Übertragungsmittels positioniert. Durch eine Auslenkung des Führungselements 2 wird das Übertragungsmittel in eine Drehbewegung von der Flachspule 6 weg bewegt. Je grösser die Auslenkung, desto grösser der Abstand zwischen metallischer Komponente 7 und Flachspule 6. Die Position der Flachspule 6 relativ zur leitfähigen Komponente 7, kann nun so gewählt werden, das bei einer Abstandsvergrösserung, d.h. Signalabnahme, gleichzeitig auch eine Abdeckung der Spule(n) verkleinert wird. Damit kann auch eine sehr kleine Auslenkung des Führungselements 2 in ein sehr deutliches Signal übersetzt werden, welches beispielsweise auch mit einer etwas einfacheren und daher günstigerer Elektronik - möglicherweise ohne Synchrondetektor - messbar ist.

Bei der in **Figur 9** gezeigten Ausführungsform wirkt die Flachspule 6 ausschliesslich als Distanzssenser. Das elektrisch leitfähige Element 7 des Übertragungsmittels 55 und die Flachspule 6 sind jeweils in zueinander parallelen Ebenen angeordnet. Je nachdem ob und wie stark das eine Führungselement 2 ausgelenkt wird, ändert sich der Abstand dieser zwei Ebenen. Durch die Änderung des Abstandes ändert sich der Einfluss der metallischen Komponente 7 auf das Wechselfeld der Flachspule 6.

Diese Anordnungen sind blosse Beispiele; das Prinzip, dass eine Dickenvariation des flachen Gegenstandes eine Bewegung eines metallischen Elementes relativ zu einer Flachspule bewirkt, kann noch in vielen anderen Geometrien realisiert werden.

Eine erfindungsgemässe Vorrichtung zum Verarbeiten von wertpapierähnlichen Gegenständen weist mindestens eine Einrichtung für die Ausführung von Verarbeitungsschritten an den wertpapierähnlichen Gegenständen auf, also beispielsweise zum Lesen, Erkennen, Kontrollieren, Verifizieren, Prüfen, Zählen, (Aus-)sortieren, Transportieren und/oder Stapeln, etc. Diese bzw. mindestens eine dieser Einrichtungen ist ein Tape-Sensor, welcher als Einrichtung der vorstehend beschriebenen Art ausgebildet ist.

## Patentansprüche

1. Einrichtung zum Feststellen einer Dicke oder Dickenvariation eines flachen Gegenstandes (3), aufweisend zwei Führungselemente (1,2) zwischen welchen der flache Gegenstand führbar ist, so, dass eine Dickenvariation des zwischen den Führungselementen durchlaufenden flachen Gegenstandes eine Auslenkung der Führungselemente gegeneinander bewirkt, mindestens eine Flachspule (6,6a,6b) und Mittel zum Anregen der Flachspule zum Erzeugen eines magnetischen Wechselfelds, ein elektrisch leitfähiges Element (7), welches durch eine Auslenkung des einen Führungselements relativ zum anderen Führungselement relativ zur Flachspule bewegt wird, sowie eine Auswerteelektronik (8) zum Erfassen des Einflusses des elektrisch leitfähigen Elementes auf das magnetische Wechselfeld, wobei die mindestens eine Flachspule als Luftspule ausgebildet ist.

2. Einrichtung nach Anspruch 1, wobei das elektrisch leitfähige Element (7) im Bereich des Wechselfelds frei von ferromagnetischen Materialien ist.

3. Einrichtung nach Anspruch 1 oder 2, wobei die mindestens eine Flachspule (66a, 6b) und Ansteuer- und Auswertemittel (8) der Flachspule (6, 6a, 6b) auf einer gemeinsamen Leiterplatte (9) ausgebildet sind.

4. Einrichtung nach einem der vorangehenden Ansprüche, wobei mehrere Paare von Führungselementen und zugeordnete Flachspulen (6,6a,6b) nebeneinander in einer Reihe angeordnet sind, zum Feststellen von Dickenvariationen auf einer gesamten Breite eines flachen Gegenstandes (3).

5. Einrichtung nach Anspruch 4, wobei Ansteuer- und Auswertemittel (8) eine Multiplexeinheit (MUX) beinhalten, welche derart mit mehreren der Flachspulen (6,6a,6b) verbunden ist, dass Signale von mehreren der Flachspulen durch eine einzige Detektionseinheit detektierbar sind.

6. Einrichtung nach einem der vorangehenden Ansprüche, wobei Ansteuer- und Auswertemittel (8) einen Synchrondetektor (SD) beinhalten.

7. Einrichtung nach einem der vorangehenden Ansprüche, wobei Ansteuer- und Auswertemittel (8) der mindestens einen Flachspule (6, 6a, 6b) Mittel zum Erzeugen eines periodischen Anregungssignals (11) aufweisen, wobei die Flachspule und ein kapazitives Element (13) Teile eines LC-Schwingkreises sind, und die Mittel zum Erzeugen des periodischen Anregungssignals so ausgebildet oder programmiert sind, dass die Frequenz des Anregungssignals kleiner ist als die Resonanzfrequenz des LC-Schwingkreises.

8. Einrichtung nach einem der vorangehenden Ansprüche, wobei ein Übertragungsmittel (5,35,55) zwischen einem der Führungselemente (2) und der Flachspule (6,6a,6b) angeordnet ist, derart, dass eine Auslenkung des einen Führungselementes via dem Übertragungsmittel in eine Bewegung des leitfähigen Elementes (7) relativ zur Flachspule übertragen wird, wobei das Übertragungsmittel (5,35,55) derart ausgestaltet ist, dass damit eine Auslenkung des einen Führungselements (2) in eine proportional vergrösserte und/oder in der Richtung veränderte Bewegung des elektrisch leitfähigen Elementes übertragen wird.

9. Einrichtung nach einem der vorangehenden Ansprüche, wobei das elektrisch leitfähige Element (7) eine flache Oberfläche aufweist und bei einer Auslenkung der Führungselemente gegeneinander das elektrisch leitfähige Element parallel zur Ebene bewegt wird, in welcher die mindestens eine Flachspule (6,6a,6b) ausgebildet ist, wobei sich die Flachspule über eine bestimmte Fläche erstreckt und wobei die durch die flache Oberfläche abgedeckte Teilfläche dieser Fläche in Funktion der Auslenkung des einen Führungselements verändert.

10. Einrichtung nach einem der vorangehenden Ansprüche, wobei:
- zwei in derselben Ebene angeordnete Flachspulen (6a, 6b) einem elektrisch leitfähigen Element zugeordnet sind,
- die Ansteuer- und Auswertemittel zum Bilden eines Differenzsignals (A-B) von Einzelsignalen der beiden Flachspulen ausgebildet sind,
- in der durch die Flachspulen definierten Ebene eine erste Richtung (z) im wesentlichen parallel zur Auslenkung des einen Führungselements, und eine zur ersten Richtung senkrechte zweite Richtung (x) definiert sind,
- und die Ausdehnung der einen Flachspule (6a) in der ersten Richtung (z) in Funktion der Position entlang der zweiten Richtung (x) monoton grösser oder monoton kleiner wird
- und die Ausdehnung der anderen Flachspule (6b) in der ersten Richtung (z) als Funktion der Position entlang der zweiten Richtung (x) einen zur ersten Flachspule qualitativ umgekehrten Verlauf aufweist.

11. Einrichtung nach einem der vorangehenden Ansprüche, wobei der minimale Abstand zwischen einer Ebene, in welcher die mindestens eine Flachspule (6, 6a, 6b) ausgebildet ist, und dem elektrisch leitfähigen Element (7) höchstens 7 mm beträgt.

12. Einrichtung nach einem der vorangehenden Ansprüche, wobei durch eine Auslenkung des einen Führungselements relativ zum anderen, der Abstand zwischen dem elektrisch leitfähigen Element (7) und der Flachspule (6,6a,6b) verändert wird.

13. Vorrichtung zur Verarbeitung wertpapierähnlicher Gegenstände mit einem als Einrichtung nach einem der vorangehenden Ansprüche ausgestalteten Tape-Sensor und/oder Merhfacheinzugs-Detektor.
